# EUROPEAN PATENT APPLICATION

(11) **EP 4 332 767 A1**
(43) Date of publication of application: **06.03.2024**
(21) Application number: 22841337.3
(22) Date of filing: 12.07.2022
(51) Int. Cl.: G06F 9/50, G06F 9/54, G06F 12/02

(54) **DATA PROCESSING METHOD AND SYSTEM, AND RELATED DEVICE**

(30) Priority: 14.07.2021 CN 202110795283
(71) Applicant: Huawei Technologies Co., Ltd., Longgang Shenzhen, Guangdong 518129 (CN)
(72) Inventor: LI, Chao, Shenzhen, Guangdong 518129 (CN); HE, Ke, Shenzhen, Guangdong 518129 (CN)
(74) Representative: Körber, Martin Hans
(86) International application number: PCT/CN2022/105031
(87) International publication number: WO 2023/284701

(57) **Abstract**

This application provides a data processing method and system, and a related device. The method is performed by a chip. The chip includes a processor and a computing core. The method includes: The processor receives metadata of first data and metadata of second data, where the second data is obtained by performing a first operation on the first data, and memory addresses corresponding to elements at adjacent positions in each row of the second data are discontinuous. The processor compares the metadata of the second data with the metadata of the first data, to determine the first operation, and further determines a second operation matching the first operation. The computing core obtains third data based on the first data and the second operation, where memory addresses corresponding to elements at adjacent positions in each row of the third data are continuous. The foregoing method can reduce dependence on device hardware, and improve conversion efficiency and conversion performance of converting a discontinuous tensor into a continuous tensor.

## Description

This application claims priority to Chinese Patent Application No. 2021107952833, filed with the China National Intellectual Property Administration on July 14, 2021 and entitled "DATA PROCESSING METHOD AND SYSTEM, AND RELATED DEVICE", which is incorporated herein by reference in its entirety.

### TECHNICAL FIELD

The present invention relates to the field of processor technologies, and in particular, to a data processing method and system, and a related device.

### BACKGROUND

Pytorch is an open-source machine learning library for application programs such as natural language processing. A Pytorch framework supports performing an operation on a view-class framework of a source tensor to obtain a view tensor, to effectively reduce performance consumption caused by copying displayed tensor data. The source tensor and the view tensor share a memory.

An operator corresponding to the operation performed on the view-class framework may be referred to as a view-class framework operator, which mainly includes a reshape (reshape) operator and a discontinuous operator. The reshape operator includes framework operators such as view, view_as, squeeze, unsqueeze, and flatten. A corresponding view tensor generated based on the operators is referred to as a continuous tensor, where when elements in the view tensor are arranged in a row-major manner, corresponding index memories are consistent with those of the source tensor, and are continuously distributed. The discontinuous operator includes framework operators such as transpose (transpose), narrow (narrow), and expand (expand). A corresponding view tensor generated based on the operators is referred to as a discontinuous tensor, where when elements in the view tensor are arranged in a row-major manner, corresponding index memories are different from those of the source tensor, and are discontinuously distributed on a shared memory.

During current application, the discontinuous tensor usually needs to be converted into the continuous tensor. A current conversion solution is mainly to copy the discontinuous tensor from a device side (for example, a neural-network processing unit (neural-network processing unit, NPU) chip) to a host, and the host completes the conversion of the discontinuous tensor and then copies a converted discontinuous tensor back to the device side. In conclusion, in the current solution for converting the discontinuous tensor into the continuous tensor, conversion efficiency is low, a requirement on device hardware is high, and performance consumption is high.

Therefore, how to improve tensor conversion efficiency, reduce dependence on the device hardware in a conversion process, and improve device conversion performance is an urgent problem to be resolved currently.

### SUMMARY

Embodiments of the present invention disclose a data processing method and system, and a related device. A discontinuous scenario is deduced, to determine an operation matching the discontinuous scenario and perform the operation to complete a conversion process. This can effectively improve conversion efficiency of converting a discontinuous tensor into a continuous tensor, reduce dependence on device hardware, and improve conversion performance.

According to a first aspect, this application provides a data processing method. The method is performed by a data processing system. The system includes a processor and a computing core. The method includes: The processor obtains metadata of first data and metadata of second data, where the second data is obtained by performing a first operation on the first data, and memory addresses corresponding to elements at adjacent positions in each row of the second data are discontinuous. The processor compares the metadata of the second data with the metadata of the first data, to determine the first operation. The processor determines a second operation matching the first operation. The computing core obtains third data based on the first data and the second operation, where memory addresses corresponding to elements at adjacent positions in each row of the third data are continuous.

Optionally, the first data may be a source tensor, the second data may be a discontinuous tensor obtained by performing the first operation on the source tensor, the third data may be a continuous tensor obtained by performing the second operation on the source tensor, and the first operation may be a discontinuous framework operator, for example, a transpose operator, a narrow operator, or an expand operator.

In this embodiment of this application, the processor compares metadata of the source tensor with metadata of the discontinuous tensor, and deduces a generation scenario of the discontinuous tensor, to determine an operation performed on the source tensor, and further determine a tensor boost engine (tensor boost engine, TBE) operator matching the operation. The computing core executes the TBE operator on the source tensor, to complete a process of converting the discontinuous tensor into the continuous tensor. This can improve conversion efficiency, reduce dependence on performance of an AI CPU of a chip, and effectively improve conversion performance.

With reference to the first aspect, in a possible implementation of the first aspect, the processor compares a shape shape, a stride stride, and a memory offset memory_offset of the second data with a shape, a stride, and memory_offset of the first data in one-to-one correspondence, to determine the first operation.

In this embodiment of this application, metadata of a tensor may effectively be used to describe feature information of the tensor, for example, features such as a shape, a stride, and memory_offset of the tensor. By comparing the metadata of the source tensor with the metadata of the discontinuous tensor, the processor can properly deduce the generation scenario of the discontinuous tensor, to accurately determine the operation performed on the source tensor.

With reference to the first aspect, in a possible implementation of the first aspect, the processor traverses an operator information library, where the operator information library includes a plurality of tensor boost engine TBE operators. The processor determines, as the second operation matching the first operation, an operator that is in the operator information library and that has a same feature as the first operation.

In this embodiment of this application, after determining the operation performed on the source tensor, the processor may further search the current operator information library. When finding that a feature described by using metadata of an operator is the same as a feature corresponding to the operation, the processor may determine that the operator is of a same type as the operation, in other words, the operator is a TBE operator matching the operation.

With reference to the first aspect, in a possible implementation of the first aspect, the processor delivers a conversion command to the computing core, where the conversion command includes the second operation, and the conversion command indicates the computing core to calculate the first data based on the second operation to obtain the third data.

In this solution provided in this application, after finding, in the operator information library, the TBE operator matching the first operation, the processor notifies the computing core to execute the TBE operator on the source tensor, to obtain the continuous tensor, where index memories corresponding to elements at adjacent positions in each row of the tensor are continuous. In this way, a tensor conversion process can be completed without depending on the AI CPU, thereby reducing dependence on chip hardware.

With reference to the first aspect, in a possible implementation of the first aspect, the processor constructs fourth data, where metadata of the fourth data is the same as the metadata of the first data, and the fourth data and the first data share a memory. The computing core performs the second operation on the fourth data to obtain the third data.

In this solution provided in this application, before the computing core performs calculation, the processor may obtain, based on the determined TBE operator, input parameter information required by the operator, where the input parameter information includes an input tensor. The input tensor may construct a temporary continuous tensor in a memory sharing manner, where metadata of the temporary continuous tensor is the same as the metadata of the source tensor. After the temporary continuous tensor is constructed, the computing core can perform corresponding calculation, to ensure that the computing core can correctly execute the corresponding TBE operator, to complete the tensor conversion process.

With reference to the first aspect, in a possible implementation of the first aspect, the first operation includes at least one of a transpose transpose operator, a narrow narrow operator, and an expand expand operator.

With reference to the first aspect, in a possible implementation of the first aspect, the system includes at least one of an NPU, a graphics processing unit (graphics processing unit, GPU), a tensor processing unit (tensor processing unit, TPU), and a deep learning processing unit (data processing unit, DPU).

With reference to the first aspect, in a possible implementation of the first aspect, the processor is located in a host of the data processing system, or the processor is located in a chip of the data processing system.

In this solution provided in this application, a process of deducing the generation scenario of the discontinuous tensor may be completed by the host in the data processing system, or may be completed by the chip in the data processing system. Regardless of whether scenario deduction is completed by the host or the chip, the computing core eventually executes the TBE operator to convert the discontinuous tensor into the continuous tensor. In this way, data copy and hardware dependence on the AI CPU are reduced, and conversion efficiency and conversion performance are improved.

According to a second aspect, this application provides a data processing system. The system includes a processor and a computing core.

The processor is configured to: obtain metadata of first data and metadata of second data, where the second data is obtained by performing a first operation on the first data, and memory addresses corresponding to elements at adjacent positions in each row of the second data are discontinuous; compare the metadata of the second data with the metadata of the first data, to determine the first operation; and determine a second operation matching the first operation.

The computing core is configured to obtain third data based on the first data and the second operation, where memory addresses corresponding to elements at adjacent positions in each row of the third data are continuous.

It should be understood that a chip may simultaneously include a plurality of processors and computing cores, which may concurrently execute respective tasks without affecting or interfering with each other. Quantities of processors and computing cores of the chip are not limited in this application.

With reference to the second aspect, in a possible implementation of the second aspect, the processor is specifically configured to compare a shape shape, a stride stride, and a memory offset memory_offset of the second data with a shape, a stride, and memory_offset of the first data in one-to-one correspondence, to determine the first operation.

With reference to the second aspect, in a possible implementation of the second aspect, the processor is specifically configured to: traverse an operator information library, where the operator information library includes a plurality of TBE operators; and determine, as the second operation matching the first operation, an operator that is in the operator information library and that has a same feature as the first operation.

With reference to the second aspect, in a possible implementation of the second aspect, the processor is further configured to deliver a conversion command to the computing core, where the conversion command includes the second operation, and the conversion command indicates the computing core to calculate the first data based on the second operation to obtain the third data.

With reference to the second aspect, in a possible implementation of the second aspect, the processor is further configured to construct fourth data, where metadata of the fourth data is the same as the metadata the first data, and the fourth data and the first data share a memory. The computing core is further configured to perform the second operation on the fourth data to obtain the third data.

With reference to the second aspect, in a possible implementation of the second aspect, the first operation includes at least one of a transpose transpose operator, a narrow narrow operator, and an expand expand operator.

With reference to the second aspect, in a possible implementation of the second aspect, the processor is located in a host of the system, or the processor is located in a chip of the data processing system.

With reference to the second aspect, in a possible implementation of the second aspect, the chip includes at least one of a neural-network processing unit NPU, a graphics processing unit GPU, a tensor processing unit TPU, and a deep learning processing unit DPU.

According to a third aspect, this application provides a chip, including a processor and a computing core.

The processor is configured to: obtain metadata of first data and metadata of second data, where the second data is obtained by performing a first operation on the first data, and memory addresses corresponding to elements at adjacent positions in each row of the second data are discontinuous; compare the metadata of the second data with the metadata of the first data, to determine the first operation; and determine a second operation matching the first operation.

The computing core is configured to obtain third data based on the first data and the second operation, where memory addresses corresponding to elements at adjacent positions in each row of the third data are continuous.

According to a fourth aspect, this application provides a computing device, including the data processing system provided in any implementation of the first aspect.

According to a fifth aspect, this application provides a computer storage medium, where the computer storage medium stores a computer program, and when the computer program is executed by a processor, the method provided in any one of the first aspect and the implementations of the first aspect can be implemented.

According to a sixth aspect, this application provides a computer program product, where the computer program includes instructions, and when the computer program is executed by a computer, the computer is enabled to perform the method provided in any one of the first aspect and the implementations of the first aspect.

### BRIEF DESCRIPTION OF DRAWINGS

To describe technical solutions in embodiments of the present invention more clearly, the following briefly describes the accompanying drawings for describing embodiments. It is clear that the accompanying drawings in the following descriptions show some embodiments of the present invention, and persons of ordinary skill in the art may still derive other drawings from these accompanying drawings without creative efforts.
FIG. 1 is a schematic diagram of tensor conversion according to an embodiment of this application;
FIG. 2 is a schematic diagram of a structure of a system according to an embodiment of this application;
FIG. 3 is a schematic flowchart of a data processing method according to an embodiment of this application;
FIG. 4 is a schematic diagram of a transpose operation according to an embodiment of this application;
FIG. 5 is a schematic diagram of input parameter information of a transpose operator according to an embodiment of this application;
FIG. 6 is a schematic diagram of another tensor conversion process according to an embodiment of this application; and
FIG. 7 is a schematic diagram of a structure of a chip according to an embodiment of this application.

### DESCRIPTION OF EMBODIMENTS

The following clearly and completely describes technical solutions in embodiments of this application with reference to the accompanying drawings. It is clear that the described embodiments are merely some rather than all of embodiments of this application.

First, some terms and conventional technologies in this application are explained and described with reference to the accompanying drawings, to help persons skilled in the art have a better understanding.

Metadata is data for describing actual data, and is used to describe attribute information of the actual data. The attribute information may be a file name of the actual data, a storage address pointer of the actual data, or the like. For example, metadata of a tensor may be used to describe feature information such as a shape, a quantity of dimensions, and a format of the tensor. In addition, the metadata may further have a corresponding identifier identifying the metadata. The metadata and the corresponding identifier may form a key-value pair. Each key-value pair may include a key (key) and a value (value) corresponding to the key. The value is the metadata, and the key identifies the value.

A host may also be referred to as a client, is connected to a hard disk, a hard disk subsystem, or a file server, and can store data and a computer system for I/O access. The host may specifically include a physical machine, a virtual machine, a container, and the like. The host is configured to: communicate with a device and perform data processing. For example, the device is an application server, a multiprocessor machine, a workstation, or a personal computer.

The device is a processing chip that integrates a multiplication and addition module, an activation function module, a two-dimensional data calculation module, a decompression module, and the like. The device can accelerate calculation of a neural network, and effectively improve calculation efficiency of the neural network. For example, the processing chip is an NPU, a GPU, a TPU, or a DPU. The processing chip may include a plurality of processors and computing cores, which can concurrently execute respective tasks.

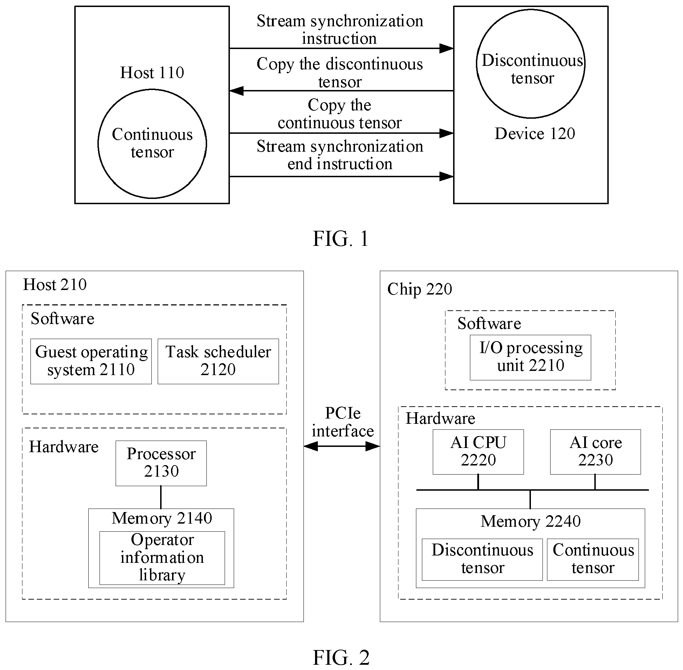

Currently, to reduce performance consumption caused by copying displayed tensor data, a Pytorch framework supports performing an operation on a view-class framework of a source tensor to obtain a view tensor, where an element in the source tensor and an element in the view tensor share a memory. However, during actual data processing, a discontinuous tensor usually needs to be converted into a continuous tensor, to further perform data processing. For example, in a compute unified device architecture (compute unified device architecture, CUDA), a memory address of each element in the discontinuous tensor is calculated. Depending on load (load) and store (store) instructions, the processing chip (for example, the GPU) may access an element at any memory position, and store the element in a specified connecting memory area, to ensure that when elements in the discontinuous tensor are arranged in a row-major manner, corresponding index memories are continuous. In this way, conversion of the discontinuous tensor is completed. However, many processing chips currently cannot efficiently copy data based on the foregoing data migration logic. For example, the NPU cannot complete conversion from the discontinuous tensor to the continuous tensor in the foregoing manner. For this type of processing chip, an operation of converting the discontinuous tensor into the continuous tensor usually needs to be completed with the help of the host. As shown in FIG. 1, a host 110 directly establishes a connection to a device 120 via a network or through a peripheral component interconnect express (peripheral component interconnect express, PCIe) interface. The host 110 may be a server, and the device 120 may be an NPU accelerator card inserted into the server. First, the host 110 delivers a stream synchronization instruction to the device 120, where the instruction hinders execution of all tasks in a current stream. After receiving the instruction, the device 120 copies a discontinuous tensor to the host 110. The host 110 calculates a memory address of each element in the discontinuous tensor based on information about the current discontinuous tensor, and then copies each element to a specified memory area according to a Load/Store instruction of a CPU. After completing the copy, the host 110 may convert the discontinuous tensor into a continuous tensor, then copy the continuous tensor to the device 120, and finally, deliver a stream synchronization end instruction to the device 120 to release a related resource. It can be learned that, during conversion of the discontinuous tensor, normal execution of another task is hindered. In addition, tensor data needs to be copied back and forth between the host and the device. Copy efficiency is low, performance consumption of the host is high, and performance of an entire conversion process is poor.

Based on the foregoing descriptions, this application provides a data processing method. A processor is used to deduce a generation scenario of a discontinuous tensor, to determine an operation matching the discontinuous scenario, and an AI core performs the operation to complete data re-copying, to convert the discontinuous tensor into a continuous tensor. This effectively improves conversion efficiency, reduces dependence on device hardware, especially an AI CPU, and improves conversion performance.

The technical solutions in embodiments of this application may be applied to any system in which conversion of the discontinuous tensor needs to be performed, and are particularly applicable to a scenario with low dependence on the AI CPU.

FIG. 2 is a schematic diagram of a structure of a system according to this application. As shown in FIG. 2, the system includes a host 210 and a chip 220. The host 210 may include a hardware layer and a software layer. The software layer includes a guest operating system 2110 and a task scheduler 2120. The hardware layer includes hardware such as one or more processors and a memory. The chip 220 may be at least one of a neural-network processing unit NPU, a graphics processing unit GPU, a tensor processing unit TPU, and a deep learning processing unit DPU. The chip 220 also includes a hardware layer and a software layer. The hardware layer includes hardware such as one or more processors (for example, AI CPUs 2220), one or more computing cores (AI Cores 2230), and a memory. The software layer includes various processing units (for example, I/O processing units 2210) to process a procedure related to converting a discontinuous tensor into a continuous tensor. The host 210 and the chip 220 may be connected through a PCIe interface. In some embodiments, the chip 220 and the host 210 may be located on different devices. In some other embodiments, the chip 220 may be mounted on the host 210 in a card insertion manner.

The host 210 is configured to work with the chip to complete conversion of the discontinuous tensor. A processor 2130 may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

A memory 2140 may be configured to store an operator information library. The memory 2140 may include a read-only memory and a random access memory, or may be a volatile memory or a nonvolatile memory, or may include both a volatile memory and a nonvolatile memory. The nonvolatile memory may be the read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be the random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In a possible implementation, the task scheduler 2120 in the host 210 sends a tensor conversion task to the processor 2130, and the processor 2130 extracts metadata of the current discontinuous tensor from the memory 2140, where the metadata includes information such as a shape, a stride, and a memory offset of the discontinuous tensor. Then, the processor 2130 compares the metadata of the discontinuous tensor with metadata of a source tensor and perform deduction, for example, compare whether elements of some axes in the shape are reduced and whether stride information remains unchanged, to determine a generation scenario of the discontinuous tensor and a first operation corresponding to the scenario. That is, the discontinuous tensor may be obtained by performing the first operation on the source tensor. Then, the processor 2130 traverses the operator information library in the memory 2140, finds a TBE operator that is of a same type as the first operation, and learns of information required by the TBE operator. Then, the processor 2130 delivers an instruction to the chip 220 through the PCIe interface, constructs a temporary continuous tensor in the chip 220 in a manner of sharing a memory of the discontinuous tensor, and delivers the TBE operator to the AI core 2230. The AI core 2230 schedules the TBE operator to calculate the temporary continuous tensor, and re-copies each element in the discontinuous tensor in a memory 2240 to a specified area to obtain a continuous tensor, where index memories corresponding to two adjacent elements in each row of the continuous tensor are continuous in the memory 2240.

It can be learned that, during tensor conversion, the generation scenario of the discontinuous tensor is deduced by using the known discontinuous tensor and the known source tensor, so that the operation corresponding to the scenario can be obtained through deduction. Then, the matched TBE operator may be obtained through mapping from the operator information library based on the operation. Finally, the AI core executes the TBE operator to generate the continuous tensor without depending on performance of hardware like the AI CPU. This can effectively improve conversion efficiency and conversion performance.

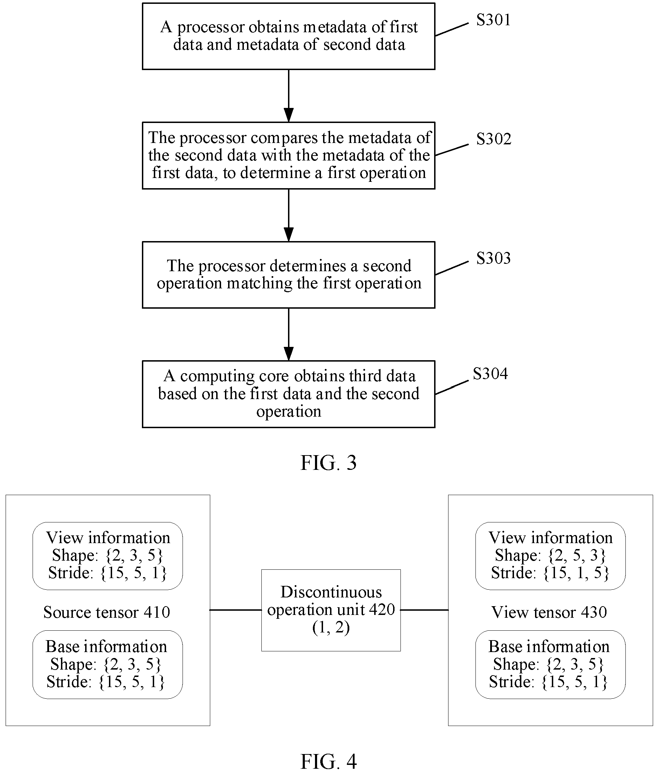

With reference to the schematic diagram of the chip shown in FIG. 2, the following describes a data processing method provided in an embodiment of this application. FIG. 3 is a schematic flowchart of a data processing method according to an embodiment of this application. The method may be applied to a data processing system shown in FIG. 2. The method may specifically include the following steps.

S301: A processor obtains metadata of first data and metadata of second data.

Specifically, in this embodiment of this application, the first data may be source tensor data, and the source tensor is an n-dimensional data structure. A specific form of the source tensor includes a scalar, a vector, a matrix, and the like. For example, a 0^{th}-dimensional tensor is a scalar. Metadata of the source tensor is data for describing the source tensor, and includes a shape, a stride, memory_offset, and the like of the tensor. Correspondingly, the second data may be a discontinuous tensor. When elements in the discontinuous tensor are arranged in a row-major manner, memory addresses corresponding to elements at adjacent positions in each row are discontinuous.

In addition, the processor may be the processor 2130 in the host shown in FIG. 2. To be specific, scenario deduction in the following step S302 and operator mapping matching in the following step S303 are completed by the host. The processor may alternatively be the AI CPU 2220 shown in FIG. 2. To be specific, the scenario deduction in step S302 and the operator mapping matching in step S303 are completed by the chip. This is not limited in this application.

It should be noted that the second data is obtained by performing a first operation on the first data, in other words, the discontinuous tensor is obtained by performing the first operation on the source tensor. The first operation is a discontinuous operation. For example, in a Pytorch architecture, the first operation is a corresponding operation of executing a discontinuous view-class framework operator on the source tensor. Optionally, the discontinuous view-class framework operator includes a transpose operator, a narrow operator, an expand operator, and the like.

For example, the first operation is a transpose operation. As shown in FIG. 4, a source tensor 410 includes view information and base information. The view information is consistent with the base information, shapes of the information are both {2, 3, 5}, and a stride is {15, 5, 1}. The source tensor is a continuous tensor. A discontinuous operation unit 420 is used to perform a transpose operation on the source tensor 410, and the transpose operation is (1, 2), to be specific, transposing the last two axes of the source tensor, to generate a discontinuous view tensor 430. It can be learned that view information is inconsistent with base information in the discontinuous view tensor 430, and compared with the source tensor 410, in the discontinuous view tensor 430, the last two axes of a shape and a stride in view information are exchanged.

It should be understood that, when a discontinuous view-class framework operation is performed on the source tensor to obtain a view tensor, only the metadata of the source tensor is changed, and the source tensor and the view tensor still share a memory. To be specific, an element in the source tensor and an element in the view tensor are the same, and occupy the same memory.

S302: The processor compares the metadata of the second data with the metadata of the first data, to determine the first operation.

Specifically, after obtaining the metadata of the source tensor and metadata of the discontinuous tensor, the processor compares each feature (for example, the foregoing shape, stride, or memory_offset) of the source tensor with each feature of the discontinuous tensor, to determine a discontinuous operation performed on the source tensor.

For example, as shown in FIG. 4, when the processor knows the discontinuous view tensor 430 and the source tensor 410, the processor needs to deduce the discontinuous operation unit 420. The processor compares the shape of the discontinuous view tensor 430 with the shape of the source tensor 410, and may determine that dimension information of the tensor remains unchanged, and the tensors are both three-dimensional tensors. The processor sorts the stride of the view information of the discontinuous view tensor 430 to obtain stride_sorted {15, 5, 1}, and adjusts a sequence of corresponding axes of the shape to obtain shape_sorted {2, 3, 5}. Both stride_sorted and shape_sorted are consistent with a stride and a shape of the base information. In addition, memory_offset is 0 and remains unchanged. The three features are consistent with features of the transpose operation. The processor may determine that the discontinuous operation unit 420 is a transpose operation unit that transposes the last two axes.

Similarly, another discontinuous operation may also be deduced based on the foregoing logic. For example, when the discontinuous operation is narrow, the processor finds, by comparing the shapes, that elements of some axes in the shape are reduced, and finds, by comparing the stride, that the stride remains unchanged. In this case, the processor may determine that the discontinuous operation is narrow, and then determine, by comparing dim information, which axis elements are reduced, to be specific, determine which axes on which the discontinuous operation occurs. Finally, by comparing memory_offset information, the processor obtains through deduction a narrow start position start and a segmentation length length.

S303: The processor determines a second operation matching the first operation.

Specifically, after identifying a category of the discontinuous operation by deducing a generation scenario of the discontinuous tensor, the processor needs to further determine a second operation matching the discontinuous operation, to be specific, determine whether there is a tensor boost engine (tensor boost engine, TBE) operator having a feature the same as a feature corresponding to the discontinuous operation.

It should be understood that, the TBE operator is compiled in a TBE language, and may be directly invoked and executed by a computing core AI core, to generate a continuous tensor. In this embodiment of this application, each discontinuous operation corresponds to one TBE operator. For example, the transpose operation corresponds to a transpose operator.

The processor traverses a current operator information library to search for a TBE operator matching the discontinuous operation. For example, in the scenario shown in FIG. 4, the discontinuous operation is the transpose operation, and has the following features: The tensor dimension information remains unchanged, the shape and the stride of the tensor are exchanged on the last two axes, and memory_offset of the tensor is 0. The transpose operator has the following features: A tensor dimension remains unchanged, information permutation of a shape and a stride occurs on a specified axis of a tensor, and memory_offset of the tensor is 0 and remains unchanged. The features of the operation and the operator are exactly the same. Therefore, the processor may determine that the TBE operator matching the transpose operation is the transpose operator, and directly determine the transpose operator in the operator information library as the operator matching the discontinuous operation.

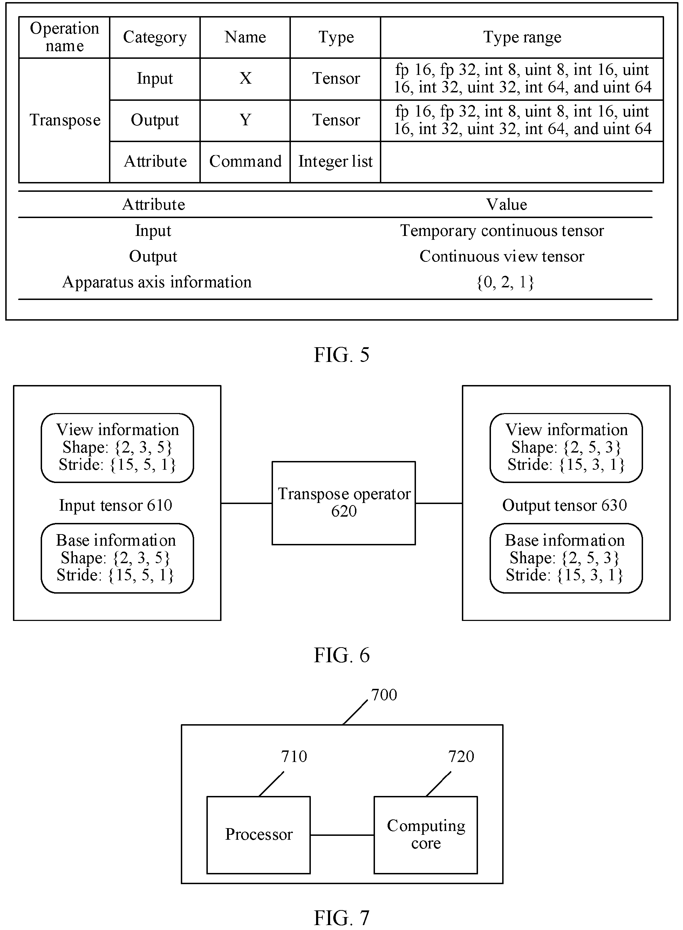

Further, after determining the TBE operator matching the discontinuous operation, the processor may obtain input parameter information required by the TBE operator. For example, FIG. 5 is a schematic diagram of input parameter information required by a transpose operator. The input parameter information includes an input tensor, a result tensor, and transposed axis information. The input tensor is a temporary continuous tensor constructed in a memory sharing manner. The result tensor is used to receive an operator execution result, and is an empty continuous tensor newly created based on view information of a discontinuous tensor. The transposed axis information is the same as transposed axis information corresponding to a transpose operation obtained through deduction.

It should be noted that, after the processor determines the second operation, if no TBE operator matching the second operation is found in the operator information library, a research and development personnel may compile a TBE operator matching the second operation, and add the TBE operator to the operator information library. In this way, operator implementation is changed at a software layer. This can effectively expand applicable scenarios, improve conversion flexibility, fully utilize performance of the AI core, and remove hardware dependence on the AI CPU

S304: The computing core obtains third data based on the first data and the second operation.

Specifically, after determining the TBE operator matching the discontinuous operation, the processor delivers the TBE operator to the computing core AI core, and the computing core AI core obtains a continuous tensor by executing the TBE operator.

It should be understood that the TBE operator exists in the operator information library in a form of a file, and the file records input parameter information of the TBE operator. The processor sends, to the computing core AI core, the file corresponding to the TBE operator. The computing core AI core executes the file corresponding to the TBE operator, to output the continuous tensor.

In a possible implementation, before delivering the TBE operator to the computing core AI core, the processor constructs a temporary continuous tensor in a memory sharing manner based on the input parameter information required by the operator. Metadata of the temporary continuous tensor is the same as the metadata of the source tensor, and the temporary continuous tensor and the source tensor share a memory. In other words, the temporary continuous tensor may be understood as restoration of the source tensor.

For example, in the scenario shown in FIG. 4, the processor constructs a temporary continuous tensor as an input tensor 610 based on input parameter information of the transpose operator. As shown in FIG. 6, the input tensor 610 is the same as the source tensor 410. A transpose operator 620 is used to calculate the input tensor 610, and transposed axis information is {0, 2, 1}. This indicates that the last two axes of a shape are transposed, and an output tensor 630 is obtained through calculation. The input tensor 630 is a continuous tensor, in other words, the output tensor 630 may also be referred to as a continuous tensor 630. It can be learned that a shape of the continuous tensor 630 is consistent with the shape of the discontinuous view tensor 430, but a stride is changed. For the continuous tensor 630, when elements in the tensor are arranged in a row-maj or manner, memory addresses corresponding to elements at adj acent positions in each row are continuous.

It should be noted that, when executing the TBE operator, the computing core AI core re-determines a memory area in a main memory, and orderly migrates the elements in the source tensor to the memory area in a memory read manner determined by using the continuous tensor, to ensure that when the continuous tensor is arranged in the row-major manner, memory addresses of adjacent elements are continuous.

It can be learned that, during execution of this embodiment of the present invention, the semantics of the view-class framework operator of the Pytorch framework does not need to be changed. The discontinuous operation is determined by deducing the generation scenario of the discontinuous tensor, and the TBE operator matching the operation is further determined. Finally, the computing core AI core is used to execute the TBE operator to generate the continuous tensor with memories that are continuously distributed, without depending on hardware performance of the AI CPU. This improves conversion efficiency and conversion performance. In addition, the discontinuous operation is more flexible, and easy to be expanded at the software layer, and performance of the computing core AI core can be fully utilized.

It should be understood that the foregoing method is applicable to the Pytorch framework. In addition, for another AI framework that has discontinuous operations such as transpose and narrow, the method provided in the present invention may be used to perform scenario inverse deduction, to complete conversion of the discontinuous tensor based on a result obtained through inverse deduction.

It should be further understood that, the foregoing merely uses the transpose operation as an example to describe how to perform scenario inverse deduction and how to complete, based on the result obtained through inverse deduction, a process of converting a tensor into a continuous tensor. For another discontinuous operation like expand, scenario deduction and tensor conversion may also be performed in the same method.

The data processing method provided in this application may be widely used in a Pytorch model training and deduction scenario, to significantly improve efficiency of model training and deduction, reduce time consumption of training, and accelerate model training. It may be understood that, if model training involves converting the discontinuous tensor into the continuous tensor, in this application, the AI core executes the TBE operator to perform memory copying to implement converting the discontinuous tensor into the continuous tensor. Compared with a process in which the host performs the memory copying to complete converting the discontinuous tensor into the continuous tensor, this method can reduce a round-trip data copying delay, and improve conversion efficiency, to effectively improve efficiency of model training and deduction, and generate a huge commercial value.

The foregoing describes in detail the method in embodiments of this application. To better implement the foregoing solutions in embodiments of this application, correspondingly, the following further provides a related device configured to implement the foregoing solutions.

FIG. 7 is a schematic diagram of a structure of a chip according to an embodiment of this application. As shown in FIG. 7, the chip 700 includes a processor 710 and a computing core 720. The chip 700 may be an NPU chip, a GPU chip, a TPU chip, or another AI chip, and may include a plurality of processors and computing cores, which may concurrently execute respective tasks. In FIG. 7, one processor and one computing core are used as an example. For functions of the chip described in this embodiment of the present invention, refer to related descriptions in embodiments of the present invention shown in FIG. 2 to FIG. 6. Details are not described herein again.

An embodiment of this application provides a computing device. The computing device may be the host in the data processing system shown in FIG. 2, and a chip is integrated into the host in a card insertion manner. The host and the chip may work together to perform related descriptions in embodiments of the present invention shown in FIG. 2 to FIG. 6. Details are not described herein again.

An embodiment of this application further provides a computer-readable storage medium, where the computer-readable storage medium stores a computer program, and when the program is executed by a processor, some or all of the steps recorded in the foregoing method embodiments may be implemented.

An embodiment of this application further provides a computer program product, where when the computer program product runs on a computer or a processor, the computer or the processor is enabled to perform one or more steps in any one of the foregoing methods. When each component module of the foregoing device is implemented in a form of a software functional unit and sold or used as an independent product, the component module may be stored in the computer-readable storage medium.

In the foregoing embodiments, descriptions of each embodiment have different emphasis. For a part that is not described in detail in an embodiment, refer to related descriptions in other embodiments.

It should be understood that, first, second, third, fourth, and various numerical numbers in this specification are merely used for distinguishing for ease of description, and are not used to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be further understood that, in various embodiments of this application, sequence numbers of the foregoing processes do not mean execution sequences. The execution sequences of the processes should be determined based on functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each specific application. However, it should not be considered that such implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located at one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the function may be stored in the computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps in the method in embodiments of this application may be adjusted, combined, and deleted based on actual requirements.

Modules in the apparatus in embodiments of this application may be combined, divided, and deleted based on actual requirements.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, wherein the method is performed by a data processing system, the data processing system comprises a processor and a computing core, and the method comprises:
obtaining, by the processor, metadata of first data and metadata of second data, wherein the second data is obtained by performing a first operation on the first data, and memory addresses corresponding to elements at adjacent positions in each row of the second data are discontinuous;
comparing, by the processor, the metadata of the second data with the metadata of the first data, to determine the first operation;
determining, by the processor, a second operation matching the first operation; and
obtaining, by the computing core, third data based on the first data and the second operation, wherein memory addresses corresponding to elements at adj acent positions in each row of the third data are continuous.

2. The method according to claim 1, wherein the comparing, by the processor, the metadata of the second data with the metadata of the first data, to determine the first operation comprises:
comparing, by the processor, a shape shape, a stride stride, and a memory offset memory_offset of the second data with a shape, a stride, and memory_offset of the first data in one-to-one correspondence, to determine the first operation.

3. The method according to claim 1 or 2, wherein the determining, by the processor, a second operation matching the first operation comprises:
traversing, by the processor, an operator information library, wherein the operator information library comprises a plurality of tensor boost engine TBE operators; and
determining, by the processor as the second operation matching the first operation, an operator that is in the operator information library and that has a same feature as the first operation.

4. The method according to any one of claims 1 to 3, wherein before the obtaining, by the computing core, third data, the method further comprises:
delivering, by the processor, a conversion command to the computing core, wherein the conversion command comprises the second operation, and the conversion command indicates the computing core to calculate the first data based on the second operation to obtain the third data.

5. The method according to any one of claims 1 to 4, wherein the obtaining, by the computing core, third data comprises:
constructing, by the processor, fourth data, wherein metadata of the fourth data is the same as the metadata of the first data, and the fourth data and the first data share a memory; and
performing, by the computing core, the second operation on the fourth data to obtain the third data.

6. The method according to any one of claims 1 to 5, wherein the first operation comprises at least one of a transpose transpose operator, a narrow narrow operator, and an expand expand operator.

7. The method according to any one of claims 1 to 6, wherein the data processing system further comprises a host and a chip, and the processor is located in the host, or the processor is located in the chip.

8. The method according to claim 7, wherein the chip comprises at least one of a neural-network processing unit NPU, a graphics processing unit GPU, a tensor processing unit TPU, and a deep learning processing unit DPU.

9. A data processing system, comprising a processor and a computing core, wherein
the processor is configured to: obtain metadata of first data and metadata of second data, wherein the second data is obtained by performing a first operation on the first data, and memory addresses corresponding to elements at adjacent positions in each row of the second data are discontinuous; compare the metadata of the second data with the metadata of the first data, to determine the first operation; and determine a second operation matching the first operation; and
the computing core is configured to obtain third data based on the first data and the second operation, wherein memory addresses corresponding to elements at adjacent positions in each row of the third data are continuous.

10. The data processing system according to claim 9, wherein the processor is specifically configured to:
compare a shape shape, a stride stride, and a memory offset memory_offset of the second data with a shape, a stride, and memory_offset of the first data in one-to-one correspondence, to determine the first operation.

11. The data processing system according to claim 9 or 10, wherein the processor is specifically configured to:
traverse an operator information library, wherein the operator information library comprises a plurality of TBE operators; and
determine, as the second operation matching the first operation, an operator that is in the operator information library and that has a same feature as the first operation.

12. The data processing system according to any one of claims 9 to 11, wherein
the processor is further configured to deliver a conversion command to the computing core, wherein the conversion command comprises the second operation, and the conversion command indicates the computing core to calculate the first data based on the second operation to obtain the third data.

13. The data processing system according to any one of claims 9 to 12, wherein
the processor is further configured to construct fourth data, wherein metadata of the fourth data is the same as the metadata of the first data, and the fourth data and the first data share a memory; and
the computing core is further configured to perform the second operation on the fourth data to obtain the third data.

14. The data processing system according to any one of claims 9 to 13, wherein the first operation comprises at least one of a transpose transpose operator, a narrow narrow operator, and an expand expand operator.

15. The data processing system according to any one of claims 9 to 14, wherein the data processing system further comprises a host and a chip, and the processor is located in the host, or the processor is located in the chip.

16. The system according to claim 15, wherein the chip comprises at least one of a neural-network processing unit NPU, a graphics processing unit GPU, a tensor processing unit TPU, and a deep learning processing unit DPU.

17. A chip, comprising a processor and a computing core, wherein
the processor is configured to: obtain metadata of first data and metadata of second data, wherein the second data is obtained by performing a first operation on the first data, and memory addresses corresponding to elements at adjacent positions in each row of the second data are discontinuous; compare the metadata of the second data with the metadata of the first data, to determine the first operation; and determine a second operation matching the first operation; and
the computing core is configured to obtain third data based on the first data and the second operation, wherein memory addresses corresponding to elements at adjacent positions in each row of the third data are continuous.

18. A computing device, comprising:
the data processing system according to any one of claims 1 to 8.

19. A computer-readable storage medium, wherein the computer-readable storage medium stores a computer program, and when the computer program is executed by a processor, the method according to any one of claims 1 to 8 is implemented.

20. A computer program, wherein the computer program comprises instructions, and when the computer program is executed by a processor, the processor is enabled to perform the method according to any one of claims 1 to 8.
